# FASCICULE DE BREVET EUROPEEN

(11) **EP 2 024 274 B1**
(45) Date de publication et mention de la délivrance du brevet: **21.11.2018**
(21) Numéro de dépôt: 07731944.0
(22) Date de dépôt: 25.04.2007
(51) Int. Cl.: C01B 3/00, C01B 6/24, C22C 14/00, C22C 27/02, C22C 27/06, B22F 9/04, C22C 1/04

(54) **COMPOSITE NANOCRISTALLIN POUR LE STOCKAGE DE L'HYDROGÈNE ET SON PROCÉDÉ DE PRÉPARATION**
NANOKRISTALLINER VERBUNDWERKSTOFF ZUR SPEICHERUNG VON WASSERSTOFF UND VERFAHREHN ZUR DESSEN HERSTELLUNG
NANOCRYSTALLINE COMPOSITE FOR STORAGE OF HYDROGEN AND PROCESS FOR ITS PREPARATION

(30) Priorité: 26.04.2006 FR 0651478
(43) Date de publication de la demande: 18.02.2009
(73) Titulaire: Centre National de la Recherche Scientifique, 75794 Paris Cedex 16 (FR)
(72) Inventeur: FRUCHART, Daniel, F-38130 Echirolles (FR); DE RANGO, Patricia, F-38610 Gieres (FR); CHARBONNIER, Jean, F-38100 Grenoble (FR); MIRAGLIA, Salvatore, F-38000 Grenoble (FR); RIVOIRARD, Sophie, F-38250 Lans En Vercors (FR); SKRYABINA, Nataliya, Perm, 614990 (RU); JEHAN, Michel, F-74890 Fessy (FR)
(74) Mandataire: LLR
(86) Numéro de dépôt international: PCT/FR2007/051171
(87) Numéro de publication internationale: WO 2007/125253

(56) Documents cités:
- WO-A1-99/20422
- HU Y Q ET AL: "Preparation and hydrogenation characteristics of Mg-30 wt.% Ti37.5V25Cr37.5 composite" JOURNAL OF ALLOYS AND COMPOUNDS, ELSEVIER SEQUOIA, LAUSANNE, CH, vol. 375, no. 1-2, 28 juillet 2004 (2004-07-28), pages 265-269, XP004517559 ISSN: 0925-8388
- KHRUSSANOVA M ET AL: "Hydrogen sorption properties of an Mg-Ti-V-Fe nanocomposite obtained by mechanical alloying" JOURNAL OF ALLOYS AND COMPOUNDS, ELSEVIER SEQUOIA, LAUSANNE, CH, vol. 327, no. 1-2, 30 août 2001 (2001-08-30), pages 230-234, XP004300957 ISSN: 0925-8388
- GRIGOROVA ET AL: "Addition of 3d-metals with formation of nanocomposites as a way to improve the hydrogenation characteristics of Mg2Ni" JOURNAL OF ALLOYS AND COMPOUNDS, ELSEVIER SEQUOIA, LAUSANNE, CH, vol. 414, no. 1-2, 13 avril 2006 (2006-04-13), pages 298-301, XP005363703 ISSN: 0925-8388
- LIANG G ET AL: "Catalytic effect of transition metals on hydrogen sorption in nanocrystalline ball milled MgH2-Tm (Tm=Ti, V, Mn, Fe and Ni) systems" JOURNAL OF ALLOYS AND COMPOUNDS, ELSEVIER SEQUOIA, LAUSANNE, CH, vol. 292, no. 1-2, 15 novembre 1999 (1999-11-15), pages 247-252, XP004364567 ISSN: 0925-8388

## Description

### Domaine de l'invention

La présente invention concerne les matériaux utilisés pour le stockage réversible de l'hydrogène. Plus particulièrement, la présente invention concerne les matériaux à base de magnésium utilisés pour le stockage combiné de l'hydrogène. La présente invention concerne également les procédés de préparation de tels matériaux.

### Exposé de l'art antérieur

L'hydrogène (H₂) est utilisé dans de nombreux domaines industriels, notamment à titre de combustible (par exemple dans des moteurs thermiques ou des piles à combustible), ou bien encore à titre de réactif (par exemple pour des réactions d'hydrogénation). Dans ce cadre, compte tenu de son volume à l'état gazeux et de son explosivité, il est souhaitable que l'hydrogène soit stocké sous une forme assurant un encombrement réduit et un confinement sécuritaire.

Une possibilité consiste à stocker l'hydrogène sous forme d'hydrures métalliques. Dans ce cas, l'hydrogène à stocker est mis en contact avec un métal ou un alliage métallique dans des conditions de pression et de température qui induisent une incorporation de l'hydrogène sous forme atomique dans le réseau cristallin (réaction d'absorption ou réaction de charge). Pour récupérer l'hydrogène ainsi stocké, on se place dans des conditions de plus faible pression et/ou de températures plus élevées, qui favorisent la réaction inverse (réaction de désorption ou réaction de décharge). On peut déterminer une "capacité de stockage réversible", exprimée en pourcentage en masse, qui correspond à la quantité d'hydrogène maximale que peut décharger le matériau de stockage une fois qu'il a été chargé. Pour plus de détails concernant le stockage de l'hydrogène sous forme d'hydrure, on pourra notamment se reporter à "Hydrogen in Intermetallic Compounds I et II", L. Schlapbach, Springer-Verlag, (1988).

De nombreux travaux de recherche sont actuellement menés pour optimiser les performances des hydrures métalliques pour le stockage de l'hydrogène, notamment pour obtenir un matériau de stockage ayant simultanément une capacité de stockage réversible élevée et des cinétiques d'absorption et de désorption compatibles avec une utilisation du matériau de stockage de façon industrielle.

Des travaux portent, par exemple, sur l'obtention d'alliages issus de familles classiques de composés inter-métalliques, par exemple des composés dérivés des alliages de zirconium-métal ZrM₂ (ou le métal M peut être le vanadium, le chrome, le manganèse, etc.) ou de lanthane-nickel LaNi₅, renfermant des éléments de substitution permettant d'accroître la capacité de stockage réversible sans diminuer la cinétique d'absorption/désorption.

D'autres travaux portent sur la réalisation de nouveaux composites nanocristallins à base de magnésium. Un composite nanocristallin est un matériau dont les dimensions caractéristiques des cristallites sont voisines du nanomètre. La capacité de stockage réversible du magnésium pur est de l'ordre de 7,6 %, ce qui correspond sensiblement aux valeurs les plus élevées susceptibles d'être obtenues avec les matériaux actuellement connus. Toutefois, pour le magnésium pur, on n'obtient des cinétiques d'absorption et de désorption acceptables que pour des températures supérieures à 300°C ce qui réduit l'intérêt d'un tel matériau. En associant le magnésium avec un ou plusieurs additifs, on peut parvenir à obtenir un composite nanocristallin dont la capacité de stockage réversible n'est pas ou peu diminuée par rapport à celle du magnésium pur mais dont les cinétiques d'absorption et de désorption de l'hydrogène sont améliorées à des températures plus faibles. De façon générale, le magnésium est dit "activé" par l'additif.

Le document EP 1024918 décrit un composite nanocristallin essentiellement à base de magnésium (Mg) et d'un autre élément minoritaire choisi, par exemple, parmi le vanadium (V), le titane (Ti) ou le niobium (Nb). Le vanadium est actuellement l'additif qui offre l'un des meilleurs compromis cinétique d'absorption/de désorption - capacité de stockage réversible. Un tel matériau présente des cinétiques d'absorption et de désorption de l'hydrogène améliorées par rapport au magnésium pur. Toutefois, il serait souhaitable d'obtenir un matériau ayant des cinétiques d'absorption et de désorption améliorées avec une capacité de stockage réversible du même ordre voire supérieure. En outre, le vanadium est un matériau relativement onéreux.

### Résumé de l'invention

La présente invention vise à obtenir un matériau composite de stockage de l'hydrogène à base de magnésium qui a des cinétiques d'absorption et de désorption améliorées et une capacité de stockage réversible au moins du même ordre par rapport aux matériaux de stockage de l'hydrogène connus à base de magnésium.

La présente invention vise également un procédé de fabrication d'un tel matériau de stockage de l'hydrogène à base de magnésium qui est compatible avec un procédé de fabrication à une échelle industrielle.

Selon un autre objet de la présente invention, le procédé est simple et susceptible d'être mis en oeuvre de façon conventionnelle comme pour les matériaux composites de magnésium activé.

Pour atteindre tout ou partie de ces objets ainsi que d'autres, la présente invention prévoit un procédé de préparation d'un matériau adapté au stockage réversible de l'hydrogène, ledit procédé étant selon les revendications 1 à 6. Il est divulgué également un procédé comprenant les étapes réalisées successivement consistant à fournir une première poudre d'un matériau à base de magnésium à hydrogéner la première poudre pour convertir au moins une partie de la première poudre en hydrures métalliques ; à mélanger la première poudre hydrogénée à une seconde poudre d'un additif, la proportion massique de la seconde poudre dans le mélange obtenu étant comprise entre 1 et 20 % massique, ledit additif étant formé à partir d'un alliage (al) de structure cubique centrée, à base de titane, de vanadium et d'au moins un autre métal choisi parmi le chrome ou le manganèse ; et à broyer le mélange des première et seconde poudres.

La présente invention prévoit également un matériau métallique composite, destiné au stockage réversible de l'hydrogène, obtenu par le procédé selon le procédé précédemment décrit, ledit matériau étant selon les revendications 7 et 8. Il est également divulgué un matériau comprenant des premières particules d'un matériau à base de magnésium ; et des secondes particules au moins en partie réparties à la surface des premières particules et comprenant au moins une phase à base de titane, de vanadium et d'au moins un métal choisi parmi le chrome ou le manganèse ou leurs alliages.

Selon un mode de réalisation de 1' invention, au moins certaines des secondes particules comprennent une phase majoritaire à base de titane, de vanadium et d'au moins un métal choisi parmi le chrome et/ou le manganèse ou leurs alliages ; et au moins une phase intergranulaire à base d'un premier métal choisi parmi le zirconium, le niobium, le molybdène, le hafnium, le tantale, le tungstène, ou bien d'un alliage de ces métaux ; et d'un second métal, choisi parmi le nickel, le cuivre, ou bien un alliage de ces métaux.

### Brève description des dessins

Ces objets, caractéristiques et avantages, ainsi que d'autres de la présente invention seront exposés en détail dans la description suivante d'exemples de réalisation particuliers faite à titre non-limitatif en relation avec les figures jointes parmi lesquelles :
la figure 1 illustre les étapes d'un exemple de procédé de préparation d'un matériau de stockage de l'hydrogène à base de magnésium selon l'invention ;
la figure 2 représente, de façon schématique, la structure d'un exemple de matériau de stockage de l'hydrogène selon l'invention ;
la figure 3 représente des courbes de charge d'un exemple de matériau de stockage de l'hydrogène selon l'invention et d'un matériau classique de stockage de l'hydrogène ; et
la figure 4 représente des courbes de décharge d'un exemple de matériau de stockage de l'hydrogène selon l'invention et d'un matériau classique de stockage de l'hydrogène.

### Description détaillée

La présente invention vise à utiliser comme matériau de stockage de l'hydrogène, un matériau à base de magnésium activé par un additif particulier, la proportion d'additif étant comprise entre 1 % et 20 % en masse, par exemple, d'environ 5 % en masse. Le matériau de stockage est obtenu à partir d'une poudre du matériau à base de magnésium et d'une poudre de l'additif. Le matériau de stockage peut être mélangé à un support pour en faciliter l'utilisation et/ou la manipulation. A titre d'exemple, le support peut correspondre à du graphite expansé, à un nanocomposite à base de carbone, ou à une mousse métallique.

Le matériau à base de magnésium peut être du magnésium pur ou un alliage à base de magnésium, par exemple un alliage de magnésium et de nickel (Mg₂Ni).

Selon un premier exemple de réalisation de l'invention, l'additif correspond à un alliage (a1) de structure cristalline cubique centrée, à base de titane (Ti), de vanadium (V), et d'un autre métal choisi préférentiellement parmi le chrome (Cr) et/ou le manganèse (Mn). L'alliage (a1) peut être monophasique (alliage de type composé intermétallique défini), ou bien polyphasique. Bien entendu, l'alliage (a1) peut éventuellement contenir d'autres éléments de façon minoritaire.

Selon le premier exemple de réalisation de l'invention, l'alliage (a1) répond à la formule générale suivante :

TiₐV_{b}M_{c}M'_{d}

dans laquelle
M désigne le chrome, le manganèse ou bien un alliage de chrome et de manganèse ;
M' désigne un métal ou un alliage de métaux, autre(s) que Ti, V, Cr ou Mn, par exemple choisi parmi le fer, le cobalt, le nickel, ou les mélanges de ces métaux ;
a est un nombre allant de 0,05 à 2,5, typiquement entre 0,1 et 2, par exemple entre 0,2 et 1,5 ;
b est un nombre allant de 0,05 à 2,9, typiquement entre 0,1 et 2,2 ;
c est un nombre allant de 0,05 à 2,9, typiquement entre 0,5 et 2,5 ; et
d, éventuellement nul, est un nombre allant de 0 à 0,5, ce nombre étant de préférence inférieur à 0,2, par exemple inférieur à 0,1,
la somme (a+b+c+d) étant égale à 3.

Plus spécifiquement, il peut être intéressant d'utiliser un alliage (a1) répondant à la formule générale ci-dessous :

TiₓV_{y}Cr_{3-(x+y)}

dans laquelle :
x est un nombre allant de 0,1 à 1, typiquement supérieur ou égal à 0,2 ; et
y est un nombre allant de 0,1 à 2,5,
la somme (x+y) étant typiquement supérieure à 1,5, et généralement inférieure à 2,9.

A titre d'exemples d'alliages (a1) particulièrement adaptés comme additif, on peut citer, de façon non limitative, les alliages répondant aux formules générales suivantes :

TiV_{0,8}Cr_{1,2}

Ti_{0,9}V_{0,7}Cr_{1,4}

Ti_{0,833}V_{0,826}Cr_{1,334}

Ti_{0,7}V_{0,9}Cr_{1,4}

Ti_{0,66}VCr_{1,33}

Ti_{0,5}V_{1,9}Cr_{0,6}

Ti_{0,5}V₂Cr_{0,5}

Ti_{0,25}V_{2,5}Cr_{0,25}

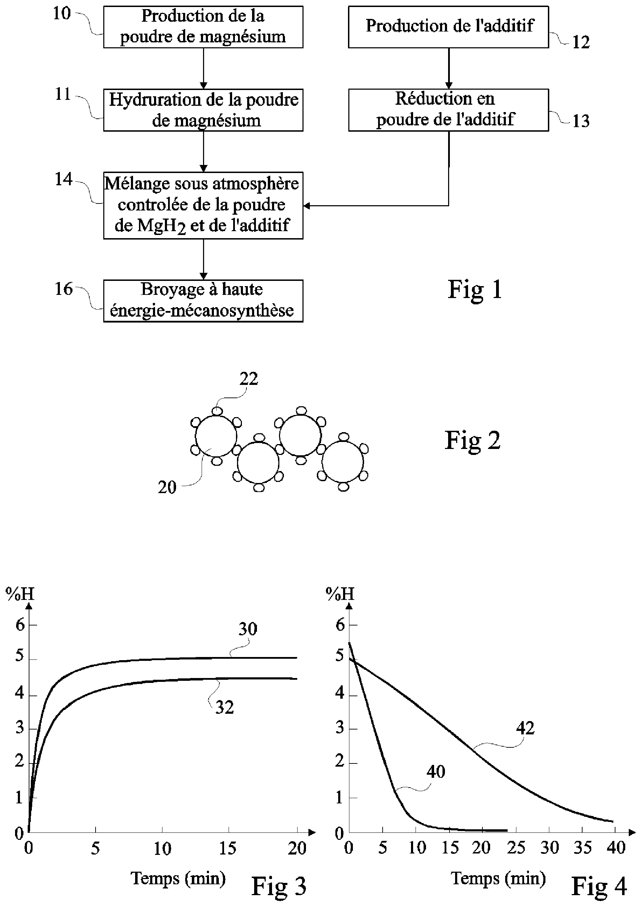

La figure 1 représente schématiquement les étapes d'un exemple de procédé de préparation du matériau de stockage de l'hydrogène selon l'invention.

A l'étape 10, on réalise une poudre du matériau à base de magnésium. Le matériau à base de magnésium est, par exemple, du magnésium produit par les procédés de réduction thermique (PIDGEON) ou par électrolyse de chlorure de magnésium. Il peut aussi être redistillé. La poudre de magnésium peut être obtenue à partir de lingots de magnésium qui sont broyés. Le diamètre moyen des particules de magnésium obtenues est compris entre 10 pm et 200 µm, de préférence entre 10 µm et 100 µm, par exemple, de l'ordre de 40 µm.

A l'étape 11, on réalise une hydrogénation de la poudre de magnésium. L'étape d'hydrogénation est par exemple réalisée sous une atmosphère d'hydrogène à une pression de quelques dizaines de bars, par exemple de l'ordre de 30 bars (30*10⁵ Pa) et à une température de quelques centaines de degrés, par exemple supérieure à 400°C, pendant plusieurs heures. On obtient, à la fin de l'étape 11, une poudre comprenant 99 % en poids d'hydrure de magnésium, la masse résiduelle correspondant à du magnésium métallique et à de l'oxyde de magnésium. Le procédé se poursuit à l'étape 14, les étapes 12 et 13 décrites par la suite étant réalisées indépendamment des étapes 10 et 11.

A l'étape 12, on réalise la poudre de l'additif, séparément de la poudre de magnésium.

Selon un exemple d'additif de la présente divulgation, l'alliage (a1) peut être préparé par fusion d'un mélange comprenant, entre autres, du titane, du vanadium et du chrome et/ ou manganèse, par exemple à des températures de l'ordre de 1300°C à 1700°C. La fusion peut être réalisée dans un four à induction, ou tout autre four permettant une fusion à haute température, sous une atmosphère de gaz neutre (de l'argon par exemple), notamment pour éviter une oxydation de l'alliage.

Selon l'invention, l'additif est obtenu en réalisant la co-fusion, puis le refroidissement, des mélanges métalliques suivants ou en réalisant une étape de mécano-synthèse par co-broyage des mélanges métalliques suivants :
un premier alliage ou mélange métallique (ml) qui est l'alliage (al), ou bien à un mélange des métaux constitutifs dudit alliage (al), dans les proportions dudit alliage, ces métaux étant présents dans le mélange à l'état de métaux simples (non alliés) et/ou d'alliages métalliques ; et
un second alliage ou mélange (m2), qui est
   - un alliage (a2), comprenant :
      de 38 à 42 % en mole d'un premier métal Ml choisi parmi le zirconium (Zr), le niobium (Nb), le molybdène (Mo), le hafnium (Hf) le tantale (Ta), le tungstène (W), et les mélanges de ces métaux; et
      de 56 à 60 % en mole d'un second métal M2, choisi parmi le nickel (Ni), le cuivre (Cu), et les alliages ou mélanges de ces métaux ou bien
   - un mélange des métaux constitutifs dudit alliage (a2), dans les proportions dudit alliage, ces métaux étant présents dans le mélange à l'état de métaux simples (non alliés) et/ou d'alliages métalliques ;
avec un rapport massique (m2)/(m1+m2) allant de 0,1% à 20% en masse dans l'étape de co-fusion ou de mécano-synthèse. Le rapport massique (m2)/(m1+m2) est de préférence compris entre 0,5 % et 20 % en masse, de préférence entre 0,5 % et 15 % en masse, et, de préférence, entre 1 % et 10 % en masse.

Selon un mode de réalisation particulier, l'alliage (a2) répond à la formule suivante :

M¹₇₋ₘM²₁₀₋ₙM³ₚ

dans laquelle :
M¹ désigne un premier métal, choisi parmi le zirconium (Zr), le niobium (Nb), le molybdène (Mo), le hafnium (Hf), le tantale (Ta), le tungstène (W), et les mélanges de ces métaux, M¹ étant de préférence Zr ;
M² désigne un deuxième métal, choisi parmi le nickel (Ni), le cuivre (Cu), et les mélanges de ces métaux, M² désignant de préférence Ni ;
M³ désigne un métal ou un mélange de métaux, éventuellement présent dans l'alliage, distinct de M¹ et M² ;
m est un nombre positif, négatif, ou nul, allant de -0,1 à +0,1 ;
n est un nombre positif, négatif, ou nul, allant de -0,1 à +0,1 ; et
p est un nombre positif, ou nul, allant de 0 à 0,2.

Plus préférentiellement, l'alliage (a2) répond à la formule suivante :

M¹₇M²₁₀

dans laquelle M¹ et M² sont tels que définis précédemment.

L'alliage (a2) répond, par exemple, à la formule Zr₇Ni₁₀.

Quelle que soit sa composition, l'alliage (a2) peut être préparé de façon analogue à l'alliage (a1), typiquement par fusion conjointe de ses éléments constitutifs, en général entre 1100°C et 1500°C, par exemple par induction, avantageusement sous une atmosphère d'un gaz neutre, tel que l'argon, notamment pour éviter une oxydation de l'alliage. Il peut être également préparé par mécano-synthèse par co-broyage.

Un exemple de procédé de fabrication de l'additif est décrit plus en détail dans la demande de brevet FR0601615 déposée au nom du CNRS.

L'additif possède une structure bi- ou multiphasique très spécifique, généralement fine et homogène, qui comprend :
une phase majoritaire à base de titane, de vanadium et de chrome et/ou de manganèse, dispersée sous forme de grains ayant typiquement des dimensions comprises entre 10 et 100 microns, notamment entre 20 et 80 microns, par exemple entre 40 et 50 microns ; et
au moins une phase intergranulaire à base d'un premier métal choisi parmi le zirconium, le niobium, le molybdène, le hafnium, le tantale, le tungstène, ou bien d'un mélange de ces métaux ; et d'un second métal, choisi parmi le nickel, le cuivre, ou bien un mélange de ces métaux.

Dans ce matériau composite spécifique multiphasé réalisé à partir des phases (a1) et (a2), les grains de phase majoritaire sont dispersés au sein d'un milieu intergranulaire comprenant une ou plusieurs phases. Ainsi, la ou les phase(s) intergranulaire(s) forment des parois entre les grains dispersés. Ces parois ont en général une épaisseur moyenne de l'ordre de quelques microns (typiquement entre 1 et 5 microns).

Dans ce matériau multiphasé, la phase majoritaire (ou phase *"intragranulaire")* a généralement une composition relativement proche de celle de l'alliage (a1) initial. La ou les phases intergranulaire(s) sont quant à elles, le plus souvent, à base des métaux constitutifs de l'alliage (a2). Néanmoins, il est à noter que la co-fusion peut induire des phénomènes de diffusion de certains atomes entre les alliages, ce par quoi les compositions des phases intragranulaires et intergranulaires peuvent s'écarter en une assez large mesure des compositions initiales des alliages (a1) et (a2). De même, la structure cristalline des phases intragranulaires et intergranulaires peut différer de celles des alliages de départ. Cependant, la phase majoritaire intragranulaire du matériau composite conserve systématiquement la structure cristalline cubique centrée de l'alliage (a1) de départ. Le procédé se poursuit à l'étape 13.

A l'étape 13, on réalise une poudre à partir de l'additif. La poudre de l'additif peut être obtenue par hydrogénation du matériau métallique obtenu à l'étape de fusion permettant la conversion d'au moins une partie des alliages présents en hydrures métalliques, et conduisant directement à une fragmentation du matériau sous la forme d'une poudre. Les particules de la poudre de l'additif ont, par exemple, un diamètre moyen de l'ordre de 1 µm à 500 µm, par exemple d'environ 40 µm. Selon une variante, la poudre de l'additif peut être obtenue par broyage du matériau obtenu après l'étape de co-fusion. Lorsque l'étape 12 correspond à une étape de mécano-synthèse par co-broyage, on obtient directement l'additif sous la forme d'une poudre. Les étapes 12 et 13 sont alors confondues. Le procédé se poursuit à l'étape 14.

A l'étape 14, on réalise le mélange de la poudre d'hydrure de magnésium, ou de la poudre de l'hydrure de la phase à base de magnésium, avec la poudre de l'additif. Le procédé se poursuit à l'étape 16.

A l'étape 16, on réalise un broyage des particules de la poudre d'hydrure de magnésium, ou de la poudre de l'hydrure de la phase à base de magnésium, avec la poudre de l'additif. Le broyage est réalisé sous une atmosphère neutre ou réductrice, par exemple une atmosphère d'argon hydrogéné à pression atmosphérique ou légèrement supérieure (jusqu'à 0,2 MPa). Le broyage peut être réalisé à température ambiante ou légèrement supérieure au moyen d'un système de broyage à billes avec ou sans pales. A titre d'exemple, le broyage est réalisé pendant 4 heures dans un broyeur à haute énergie habituellement utilisé pour la mécano-synthèse. Ce broyeur est refroidi.

Pour effectuer une opération de charge d'hydrogène à partir du matériau obtenu à l'étape 16, il est nécessaire de prévoir une étape préalable de déshydrogénation totale du matériau pulvérulent obtenu à l'étape 16. Une telle étape permet la désorption de l'hydrogène stocké dans les particules de magnésium à l'étape 11 (et éventuellement dans les particules de l'additif à l'étape 14). Le matériau finalement obtenu peut alors être utilisé pour le stockage de l'hydrogène.

La figure 2 représente, de façon très schématique, la structure du matériau de stockage obtenu à la fin du procédé de préparation précédemment décrit, incluant l'étape finale de déshydrogénation. On observe la présence de particules 20 de magnésium ou à base de magnésium qui ont par exemple un diamètre moyen compris entre 1 et 20 micromètres, de préférence entre 1 et 10 micromètres. Des particules 22 de l'additif sont réparties autour de chaque particule de magnésium 20. Les particules 22 de l'additif ont par exemple un diamètre moyen compris entre 20 nanomètres et 1 µm. Le diamètre moyen des particules de magnésium du produit final est inférieur au diamètre moyen des particules de la poudre de magnésium formée à l'étape 10. Ceci est dû au fait que la présente invention prévoit une étape d'hydrogénation (étape 11) de la poudre de magnésium avant de la mélanger à la poudre de l'additif (étape 14). L'hydrure de magnésium est un matériau plus fragile que le magnésium pur de sorte que l'étape de broyage 16 entraîne une fragmentation des particules de l'hydrure de magnésium. L'étape de broyage 16 entraîne également une diminution du diamètre moyen des particules d'additif par rapport au diamètre moyen des particules de la poudre de l'additif formée à l'étape 13.

La figure 3 représente une courbe 30 d'évolution de la quantité d'hydrogène (en pourcentage massique) stockée dans le matériau de stockage selon l'invention lors d'une opération de charge du matériau de stockage. Le matériau de stockage correspond à un composite métallique formé d'un matériau à base de magnésium et de l'additif selon l'invention, la proportion massique d'additif étant de 10 % massique. L'additif a été réalisé à partir de l'alliage (a1) Ti_{0,25}V_{2,5}Cr_{0,25} et de l'alliage (a2) Zr₇Ni₁₀, le rapport massique (m2)/(m1+m2) étant de 4 %. Pour la préparation du matériau de stockage, l'étape d'hydrogénation 11 de la poudre de magnésium a été réalisée sous une atmosphère d'hydrogène à une pression de 30*10⁵ Pa (30 bars) et une température de 440°C pendant une durée de 12 heures. A titre de comparaison, la courbe 32 représente l'évolution de la quantité d'hydrogène contenue dans un matériau de stockage de référence à base de magnésium activé seulement par du vanadium, la proportion massique de vanadium étant de 10 % massique. Pour une opération de charge réalisée à une température de 240°C sous une pression d'hydrogène de 10*10⁵ Pa (10 bars), la capacité massique de stockage d'hydrogène est, au bout de 20 minutes, d'environ 5,2 % pour le matériau de stockage selon l'invention et d'environ 4,5 % pour le matériau de comparaison. La présente invention permet donc d'obtenir un matériau de stockage ayant une capacité réversible de stockage du même ordre voire supérieure à celle obtenue pour un matériau de stockage classique à base de magnésium activé, par exemple par du vanadium. La cinétique de charge du matériau préparé selon la présente invention est supérieure à celle d'un matériau de stockage classique activé par du vanadium.

La figure 4 représente une courbe 40 d'évolution de la quantité d'hydrogène contenue dans le matériau de stockage selon l'invention précédemment décrit en relation à la figure 3 lors d'une opération de décharge. A titre de comparaison, la courbe 42 représente l'évolution de la quantité d'hydrogène contenue dans le matériau de stockage à base de magnésium activé par du vanadium précédemment décrit en relation à la figure 3. L'opération de décharge a été réalisée à une température de 260°C sous une pression d'hydrogène de 15 kPa. La vitesse de désorption de l'hydrogène contenu dans le matériau de stockage selon l'invention est supérieure à celle obtenue pour un matériau de stockage classique à base de magnésium activé par du vanadium.

La présente invention permet l'obtention d'un matériau de stockage ayant des cinétiques de charge et de décharge améliorées par rapport à un matériau de stockage classique à base de magnésium activé par du vanadium. De plus, la présente invention permet d'obtenir une capacité réversible de stockage du même ordre voire supérieure par rapport à un matériau de stockage classique à base de magnésium activé par un additif. En outre, la présente invention permet de diminuer le coût du matériau de stockage. En effet, le vanadium est un matériau relativement onéreux. En outre, le procédé de préparation du matériau de stockage selon l'invention met en oeuvre des étapes de fusion de métaux, de broyage et d'hydrogénation qui sont des étapes bien connues des procédés de traitement des matériaux. Le procédé de préparation selon l'invention peut donc facilement être mis en oeuvre à une échelle industrielle. Enfin, lors d'une opération de décharge, on obtient de l'hydrogène de haute pureté.

## Revendications

1. Procédé de préparation d'un matériau adapté au stockage réversible de l'hydrogène, comprenant les étapes suivantes, réalisées successivement :
(a) fournir une première poudre d'un matériau à base de magnésium ;
(b) hydrogéner la première poudre pour convertir au moins une partie de la première poudre en hydrures métalliques ;
(c) mélanger la première poudre hydrogénée à une seconde poudre d'un additif, la proportion massique de la seconde poudre dans le mélange obtenu étant comprise entre 1 et 20 % massique, ledit; additif étant formé à partir d'un alliage (a1) de structure cubique centrée, à base de titane, de vanadium et d'au moins un autre métal choisi parmi le chrome ou le manganèse ; et
(d) broyer le mélange des première et seconde poudres,
dans lequel l'additif est obtenu par co-fusion, puis refroidissement ou par mécano-synthèse par co-broyage, des mélanges métalliques suivants :
un mélange métallique (m1), qui est :
- un alliage ou mélange métallique (a1), de structure cristalline cubique centrée, à base de titane (Ti), de vanadium (V), et d'un autre métal M choisi parmi le chrome (Cr), le manganèse (Mn), et les alliages de ces métaux ; ou bien
- un mélange des métaux constitutifs dudit alliage (a1), dans les proportions dudit alliage (a1), ces métaux étant présents dans le mélange à l'état de métaux simples et/ou d'alliages métalliques ; et
un mélange (m2), qui est
- un alliage (a2), comprenant :
de 38 à 42 % en mole d'un premier métal M¹ choisi parmi le zirconium (Zr), le niobium (Nb), le molybdène (Mo), le hafnium (Hf) le tantale (Ta), le tungstène (W), et les mélanges de ces métaux ; et
de 56 à 60 % en mole d'un métal M², choisi parmi le nickel (Ni), le cuivre (Cu), et les alliages de ces métaux ; ou bien
- un mélange des métaux constitutifs dudit alliage (a2), dans les proportions dudit alliage (a2), ces métaux étant présents dans le mélange à l'état de métaux simples et/ou d'alliages métalliques ;
avec un rapport massique (m2)/(m1+m2) allant de 0,1 % à 20 % en masse dans l'étape de co-fusion.

2. Procédé selon la revendication 1, dans lequel l'alliage (a1) répond à la formule générale suivante :
TiₐV_{b}M_{c}M'_{d}
dans laquelle
M désigne le chrome, le manganèse ou bien un alliage de chrome et de manganèse ;
M' désigne un métal ou un alliage de métaux, autre (s) que Ti, V, Cr ou Mn, par exemple choisi parmi le fer, le cobalt, le nickel, ou les mélanges de ces métaux ;
a est un nombre allant de 0,05 à 2,5 ;
b est un nombre allant de 0,05 à 2,9 ;
c est un nombre allant de 0,05 à 2,9 ; et
d, éventuellement nul, est un nombre allant de 0 à 0,5, la somme (a+b+c+d) étant égale à 3.

3. Procédé selon la revendication 1, dans lequel l'alliage (a2) répond à la formule générale suivante :
M¹₇₋ₘM²₁₀₋ₙM³ₚ
dans laquelle :
M¹ désigne un premier métal, choisi parmi le zirconium (Zr), le niobium (Nb), le molybdène (Mo), le hafnium (Hf), le tantale (Ta), le tungstène (W), et les mélanges de ces métaux ;
M² désigne un deuxième métal, choisi parmi le nickel (Ni), le cuivre (Cu), et les mélanges de ces métaux ;
M³ désigne un métal ou un mélange de métaux, éventuellement présent dans l'alliage, distinct de M¹ et M² ;
m est un nombre positif, négatif, ou nul, allant de -0,1 à +0,1 ;
n est un nombre positif, négatif, ou nul, allant de -0,1 à +0,1 ; et
p est un nombre positif, ou nul, allant de 0 à 0,2.

4. Procédé selon la revendication 1, dans lequel l'alliage (a2) répond à la formule suivante :
Zr₇Ni₁₀.

5. Procédé selon la revendication 1, dans lequel le rapport massique (m2)/(ml+m2) est compris entre 0,5 et 20 % en masse, de préférence entre 1 et 10 % en masse.

6. Procédé selon la revendication 1, dans lequel, à l'étape (a), les particules de la première poudre ont un diamètre moyen compris entre 10 et 200 µm, et dans lequel les particules de la première poudre ont, à la fin de l'étape (d), un diamètre moyen compris entre 1 et 20 µm.

7. Matériau métallique composite, destiné au stockage réversible de l'hydrogène, obtenu par le procédé selon l'une quelconque des revendications 1 à 6, comprenant :
des premières particules (20) d'un matériau à base de magnésium ; et
des secondes particules (22) au moins en partie réparties à la surface des premières particules et comprenant au moins une phase à base de titane, de vanadium et d'au moins un métal choisi parmi le chrome ou le manganèse ou leurs alliages,
dans lequel au moins certaines des secondes particules (22) comprennent :
une phase majoritaire à base de titane, de vanadium et d'au moins un métal choisi parmi le chrome et/ou le manganèse ou leurs alliages ; et
au moins une phase intergranulaire à base d'un premier métal choisi parmi le zirconium, le niobium, le molybdène, le hafnium, le tantale, le tungstène, ou bien d'un alliage de ces métaux ; et d'un second métal, choisi parmi le nickel, le cuivre, ou bien un alliage de ces métaux.

8. Matériau selon la revendication 7, dans lequel le diamètre moyen des premières particules (20) est compris entre 1 et 20 µm et dans lequel le diamètre moyen des secondes particules est compris entre 20 nm et 1 µm.

## Patentansprüche

1. Verfahren zur Herstellung eines für die reversible Speicherung von Wasserstoff ausgelegten Materials, umfassend die folgenden Schritte, die nacheinander durchgeführt werden:
a) Bereitstellung eines ersten Pulvers aus einem Material auf der Basis von Magnesium;
(b) Hydrieren des ersten Pulvers, um mindestens einen Teil des ersten Pulvers in Metallhydride umzuwandeln;
(c) Mischen des ersten hydrierten Pulvers mit einem zweiten Pulver eines Additivs, wobei der Gewichtsanteil des zweiten Pulvers in dem erhaltenen Gemisch zwischen 1 und 20 Masse-% liegt, wobei das Additiv aus einer Legierung (a1) mit kubisch raumzentrierter Struktur, basierend auf Titan, Vanadium und mindestens einem anderen Metall, ausgewählt aus Chrom oder Mangan, gebildet ist; und
d) Vermahlen des Gemisches aus dem ersten und zweiten Pulver,
wobei das Additiv durch Mitverschmelzung, dann Kühlung oder mechanische Synthese durch gemeinsames Vermahlen der folgenden Metallgemische erhalten wird:
ein Metallgemisch (m1), das ist:
- eine Legierung oder ein Metallgemisch (a1) mit kubisch raumzentrierter Struktur auf der Basis von Titan (Ti), Vanadium (V) und einem anderen Metall M, ausgewählt aus Chrom (Cr), Mangan (Mn) und Legierungen dieser Metalle; oder
- ein Gemisch der die Legierung (a1) bildenden Metalle in den Anteilen der Legierung (a1), wobei diese Metalle in dem Gemisch im Zustand einfacher Metalle und/oder Metalllegierungen vorliegen; und
ein Gemisch (m2), das ist
- eine Legierung (a2), umfassend:
38 bis 42 Mol-% eines ersten Metalls M¹, ausgewählt aus Zirkonium (Zr), Niob (Nb), Molybdän (Mo), Hafnium (Hf), Tantal (Ta), Wolfram (W) und den Gemischen der Metalle; und
56 bis 60 Mol-% eines Metalls M², ausgewählt aus Nickel (Ni), Kupfer (Cu) und den Legierungen der Metalle; oder
ein Gemisch der die Legierung (a2) bildenden Metalle in den Anteilen der Legierung (a2), wobei diese Metalle in dem Gemisch im Zustand von einfachen Metallen und/oder Metalllegierungen vorliegen;
mit einem Massenverhältnis (m2)/(m1+m2) im Bereich von 0,1 % bis 20 Masse-% im Mitverschmelzungsschritt.

2. Verfahren nach Anspruch 1, wobei die Legierung (a1) die folgende allgemeine Formel aufweist:
TiₐV_{b}M_{c}M'_{d},
in der
M Chrom, Mangan oder eine Legierung aus Chrom und Mangan bedeutet;
M' ein Metall oder eine Metalllegierung bedeutet, das / die nicht Ti, V, Cr oder Mn ist, beispielsweise ausgewählt aus Eisen, Kobalt, Nickel oder den Gemischen der Metalle;
a eine Zahl im Bereich von 0,05 bis 2,5 ist;
b eine Zahl im Bereich von 0,05 bis 2,9 ist;
c eine Zahl im Bereich von 0,05 bis 2,9 ist; und
d, gegebenenfalls Null, eine Zahl von 0 bis 0,5 ist, wobei die Summe (a+b+c+d) 3 ist.

3. Verfahren nach Anspruch 1, wobei die Legierung (a2) die folgende allgemeine Formel aufweist:
M¹₇₋ₘM²₁₀₋ₙM³ₚ,
in der:
M¹ ein erstes Metall, ausgewählt aus Zirkonium (Zr), Niob (Nb), Molybdän (Mo), Hafnium (Hf), Tantal (Ta), Wolfram (W) und Gemischen dieser Metalle, bedeutet;
M² ein zweites Metall, ausgewählt aus Nickel (Ni), Kupfer (Cu) und den Gemischen dieser Metalle bedeutet;
M³ ein Metall oder ein Gemisch von Metallen, die gegebenenfalls in der Legierung vorhanden sind, sich von M¹ und M² unterscheiden, bedeutet;
m eine positive, negative Zahl oder Null im Bereich von -0,1 bis +0,1 ist;
n eine positive, negative Zahl oder Null im Bereich von -0,1 bis +0,1 ist; und
p eine positive Zahl oder Null im Bereich von 0 bis 0,2 ist.

4. Verfahren nach Anspruch 1, wobei die Legierung (a2) die folgende Formel aufweist:
Zr₇Ni₁₀.

5. Verfahren nach Anspruch 1, wobei das Massenverhältnis (m2)/(m1+m2) zwischen 0,5 und 20 Masse-%, vorzugsweise zwischen 1 und 10 Masse-%, liegt.

6. Verfahren nach Anspruch 1, wobei in Schritt (a) die Teilchen des ersten Pulvers einen mittleren Durchmesser zwischen 10 und 200 µm aufweisen und wobei die Teilchen des ersten Pulvers am Ende von Schritt (d) einen mittleren Durchmesser zwischen 1 und 20 µm aufweisen.

7. Metallverbundwerkstoff zur reversiblen Speicherung von Wasserstoff, erhalten durch das Verfahren nach einem der Ansprüche 1 bis 6, umfassend:
erste Teilchen (20) eines Materials auf der Basis von Magnesium; und
zweite Teilchen (22), die zumindest teilweise auf der Oberfläche der ersten Teilchen verteilt sind und mindestens eine Phase auf der Basis von Titan, Vanadium und mindestens einem Metall, ausgewählt aus Chrom oder Mangan oder deren Legierungen, umfassen,
wobei mindestens einige der zweiten Teilchen (22) umfassen:
eine Mehrheitsphase auf der Basis von Titan, Vanadium und mindestens einem Metall, ausgewählt aus Chrom und/oder Mangan oder deren Legierungen; und
mindestens eine intergranuläre Phase auf der Basis eines ersten Metalls, ausgewählt aus Zirkonium, Niob, Molybdän, Hafnium, Tantal, Wolfram oder einer Legierung dieser Metalle; und eines zweiten Metalls, ausgewählt aus Nickel, Kupfer oder einer Legierung dieser Metalle.

8. Material nach Anspruch 7, wobei der mittlere Durchmesser der ersten Teilchen (20) zwischen 1 und 20 µm liegt und wobei der mittlere Durchmesser der zweiten Teilchen zwischen 20 nm und 1 µm liegt.

## Claims

1. A method for preparing a material adapted for reversible storage of hydrogen, comprising the successively performed steps of:
(a) providing a first powder of a magnesium-based material;
(b) hydrogenating the first powder to convert at least part of the first powder into metal hydrides;
(c) mixing the first hydrogenated powder with a second powder of an additive, the proportion by mass of the second powder in the resulting mixture ranging from between 1 and 20% by mass; wherein the additive is obtained from a metal alloy (a1) of body-centered crystal structure, on titanium, vanadium and at least one another metal M selected from chromium or manganese; and
(d) milling the mixture of the first and second powders, in which the additive is obtained by co-fusion followed by a cooling or by mechanosynthesis by co-milling, of the following metal mixture :
a metal mixture (m1), which is :
- a first metal alloy (a1), of body-centered crystal structure, based on titanium (Ti), on vanadium (V), and on another metal M selected from among chromium (Cr), manganese (Mn), and alloys of these metals; or
- a mixture of the metals forming said metal alloy (a1), in the proportions of said first metal alloy (a1), these metals being present in the mixture as simple metals and/or as metal alloys; and
a mixture (m2) which is
- a second metal alloy (a2) comprising:
from 38 to 42 mol % of a first metal selected from among zirconium (Zr), niobium (Nb), molybdenum (Mo), hafnium (Hf), tantalum (Ta), tungsten (W), and mixtures of these metals;
from 56 to 60 mol % of a second metal selected from among nickel (Ni), copper (Cu), and alloys of these metals, or
- or a mixture of the metals forming said second metal alloy (a2), in the proportions of said second metal alloy (a2), these metals being present in the mixture as simple metals or as metal alloys;
with a mass ratio (m2)/(m1+m2) ranging from 0.1% to 20% by mass in the co-fusion step.

2. Method of claim 1, wherein the first metal alloy (a1) complies with the following general formula:
TiaVbMcM'd
where
M designates chromium, manganese, or a chromium and manganese alloy;
M' designates a metal or an alloy of metals, other than Ti, V, Cr, or Mn, selected from among iron, cobalt, nickel, and mixtures of these metals;
a is a number in the range 0.05 to 2.5;
b is a number in the range 0.05 to 2.9;
c is a number in the range 0.05 to 2.9; and
d is a number in the range 0 to 0.5, sum (a+b+c+d) being equal to 3.

3. Method of claim 1, wherein the second metal alloy (a2) complies with the following formula:
M17-mM210-nM3p
where
M1 designates a first metal, selected from among zirconium (Zr), niobium (Nb), molybdenum (Mo), hafnium (Hf), tantalum (Ta), tungsten (W), and mixtures of these metals;
M2 designates a second metal, selected from among nickel (Ni), copper (Cu), and mixtures of these metals;
M3 designates a metal or a mixture of metals, which may be present in the alloy, different from M1 and M2;
m is a positive, negative, or null number in the range -0.1 to +0.1;
n is a positive, negative, or null number in the range -0.1 to +0.1; and p is a positive or null number in the range 0 to 0.2.

4. Method of claim 1, wherein the second metal alloy (a2) complies with the following formula:
Zr7Ni10.

5. Method of claim 1, with a mass ratio (m2)/(m1+m2) is comprised between 0.5 and 20% by mass, preferably between 1 and 10% by mass.

6. The method of claim 1, wherein, at step (a), the particles of the first powder have an average diameter in the range 10 to 200 µm, and wherein the particles of the first powder have, at the end of step (d), an average diameter in the range 1 to 20µm.

7. Compound metal material, intended for the reversible storage of hydrogen, obtained by the method according to anyone of claims 1 to 6,
first particles (20) of a magnesium-based material;
second particles (22) at least partly distributed at the surface of the first particles and comprising at least one phase based on titanium, vanadium, and on at least one metal selected from among chromium and manganese and the alloys thereof, where at least of some second particles (22) comprising
least one intergranular phase based on a first metal selected from among zirconium, niobium, molybdenum, hafnium, tantalum, tungsten, and an alloy of these metals; and on a second metal, selected from among nickel, copper, and an alloy of these metals.

8. The material of claim 7, wherein the average diameter of the first particles (20) is in the range 1 to 20 µm and wherein the average diameter of the second particles is in the range 20 nm to 1µm.
